# EUROPÄISCHE PATENTSCHRIFT

(11) **EP 0 496 979 B1**
(45) Veröffentlichungstag und Bekanntmachung des Hinweises auf die Patenterteilung: **14.12.1994**
(21) Anmeldenummer: 91120549.0
(22) Anmeldetag: 29.11.1991
(51) Int. Cl.: F16D 35/00

(54) **Regelbare Flüssigkeitsreibungskupplung**
Controllable fluid shear coupling
Accouplement réglable à fluide visqueux

(30) Priorität: 22.01.1991 AT 122/91
(43) Veröffentlichungstag der Anmeldung: 05.08.1992
(73) Patentinhaber: STEYR-DAIMLER-PUCH AKTIENGESELLSCHAFT, 1010 Wien (AT)
(72) Erfinder: Peier, Othmar, Dipl.-Ing., A-8225 Pöllau (AT)

(56) Entgegenhaltungen:
- EP-A- 0 379 267
- DE-A- 3 710 072
- GB-A- 1 158 689
- US-A- 4 022 084
- US-A- 4 042 085

## Beschreibung

Die Erfindung handelt von einer regelbaren Flüssigkeitsreibungskupplung, die aus einem eine viskose Flüssigkeit enthaltenden Gehäuse, einer in dieses hineinragenden Welle, mit dem Gehäuse drehfest verbundenen Außenlamellen, dazwischen greifenden mit der Welle drehfest vebundenen Innenlamellen und einem axial bewegbaren Stellkolben zur Änderung der Spaltweite besteht, und bei der es in keinem Betriebszustand zu einem ungeregelten steilen Drehmomentanstieg durch Anstieg des Innendruckes kommt.

Derartige regelbare Kupplungen werden in den Antrieben allradgetriebener Kraftfahrzeuge verwendet, vor allem in solchen mit sogenanntem permanentem Allradantrieb und dort vorwiegend zur Verbindung zwischen den beiden angetriebenen Achsen, aber auch anstelle von Achsdifferentialen.

Derartige regelbare Flüssigkeitsreibungskupplungen werden dann angewendet, wenn sie nicht bloß im Gelände, sondern auch bei schneller Straßenfahrt, also in sportlichen Fahrzeugen, ein nennenswertes Moment übertragen sollen, sodaß die Bodenhaftung aller vier Räder genutzt wird. Dazu ist eine entsprechende und feinfühlige Regelung des übertragenen Momentes und daher die regelbare Ausbildung der Flüssigkeitsreibungskupplung erforderlich.

Bei dem in Geländefahrzeugen üblichen Allradantrieb genügt eine nicht durch äußeren Eingriff regelbare Flüssigkeitsreibungskupplung, weil bei dieser bei anhaltendem Schlupf Erwärmung, Druckanstieg und, wenn die Lamellen entsprechend ausgebildet sind, der sogenannte "Hump" auftritt. In diesem spontan eintretenden Betriebszustand kommen Paare von Lamellen zum Anliegen, wobei Mischreibung auftritt, die zu einem unkontrollierten und steilen, wenn auch begrenzten, Ansteigen des Drohmomentes führt. Begrenzt, weil auch in diesem Betriebszustand noch Schlupf vorhanden ist, wobei aber die Kühlleistung größer ist, als die in der Kupplung anfallende Verlustleistung und somit ein wirksamer Überlastschutz besteht.

Im erfindungsgegenständlichen Fall eines geregelten permanenten Allradantriebes für Hochleistungsfahrzeuge sind die Verhältnisse grundsätzlich anders: Das Verhältnis zwischen Schlupf und Drehmoment wird meist durch Veränderung des Lamellenabstandes geregelt, sodaß auf den "Hump" verzichtet werden kann, ja sogar muß, weil ein spontan einsetzender Vorgang die Regelung stören würde. Dabei wird natürlich ein möglichst breiter Regelbereich angestrebt.

Eine solche regelbare Flüssigkeitsreibungskupplung ist etwa aus der AT-PS 384 086 bekannt. Bei dieser wird der Regelbereich durch einen geringeren Füllungsgrad und eine Flüssigkeit höherer Viskosität erweitert.

Nachteilig ist dabei, daß das Drehmoment bei sehr geringem Schlupf nach wie vor begrenzt ist und wenn der Schlupf gegen Null geht, kein Drehmoment übertragen wird. Außerdem fällt die Selbstschutzwirkung des "Hump" weg, sodaß die Kupplung durch Überhitzung Schaden nehmen kann. Im Bereich hoher Drehmomente schließlich ist der Regelbereich auch dadurch begrenzt, daß sich bei starker Verringerung der Spaltweite die Lamellen stellenweise berühren, wodurch hoher Lamellenverschleiß auftritt. Ein weiterer Nachteil ist, daß sich bei Abnehmen des Füllungsgrades durch auf die Dauer unvermeidliche Leckageverluste die Charakteristik der Kupplung verändert, was die Betriebssicherheit beeinträchtigt.

Aus der US-PS 4,022,084 ist zwar eine Flüssigkeitsreibungskupplung mit Reibungsbelägen bekannt. Bei dieser handelt es sich aber um eine nicht regelbare Kupplung, bei der also der "Hump" auftritt und die Reibungsbeläge nur die Wirkung haben, das im "Hump-Zustand" übertragene Moment weiter zu erhöhen, ohne aber je schlupflos und daher verschleißlos ein Drehmoment übertragen zu können.

Aus der US-PS 4,042,085 ist eine Reibungskupplung mit Lamellen bekannt, bei der während des Einrückens die Scherreibung im Ölfilm zwischen den Lamellen die Energieabsorbtion erhöht. Eine Beeinflussung des übertragenen Drehmomentes ist mit dieser nur kurzzeitig und bei dem in der Einrückphase hohen Schlupf möglich. Wegen der Wirkung von Reibungskräften und Scherkräften kann auch diese US-PS als nächstliegender Stand der Technik aufgefaßt werden.

Es ist somit Aufgabe der Erfindung, eine regelbare und "humplose" Flüssigkeitsreibungskupplung so weiterzuentwickeln, daß auch noch bei sehr geringem Schlupf ein weiter Regelbereich zur Verfügung steht, der sich im Laufe der Zeit nicht ändert, und daß auch im Dauerbetrieb ganz ohne Schlupf ein Drehmoment übertragen werden kann.

Diese Aufgabe wird durch die Merkmale des Patentanspruchs 1 gelöst.

Dadurch ist es möglich, mit durchgeschalteter Kupplung die Bodenhaftung aller vier Räder für maximale Traktion zu nutzen.

Es werden dadurch aber noch weitere Vorteile erzielt: Durch die Aufweitung des Kennfeldes - aufgrund des Reibmomentenanteiles - kann bei gleichem gefordertem Maximalmoment die Kupplung kleiner dimensioniert werden. Insgesamt ist auch der Leistungsverlust und damit der Energieverlust wesentlich geringer. Gegenüber einer reinen Reibungskupplung wird aber der Vorteil erreicht, daß weniger Verschleiß auftritt, da ja bereits vor oder ohne Anliegen der Reibflächen durch die Flüssigkeitsreibungswirkung ein erhebliches Moment übertragen wird, das bei nicht extremen Fahrzuständen ausreicht.

Es hat sich herausgestellt, daß bei dem erfindungsgemäßen Zusammenwirken von Reibung und Flüssigkeitsreibung nebst der kleineren Dimensionierung die Übergänge von einem Reibungsmodus zum anderen stetig sind, was die Steuerung des Druckkolbens erleichtert.

Außerdem führt das Auftreten einer geringen Leckage zu keiner Veränderung des Übertragungsverhaltens der Kupplung, da die Leckage ein Absinken des Innendruckes mit sich bringt und damit aber für die Reibflächen eine größere Axialkraft zur Verfügung steht. Mit dem Verschleiß der Reibbeläge vermindert sich wiederum der minimale Lamellenabstand, wodurch die Flüssigkeitsreibungswirkung auf ihrer ursprünglichen Abstimmungskennlinie bleibt.

Wenn in weiterer Ausbildung der Erfindung die Reibfläche des Reibbelages eine kreisringförmige Zone ist, deren Fläche bis etwa ein Drittel der wirksamen Lamellenfläche beträgt und die die restliche wirksame Lamellenfläche in axialer Richtung nur geringfügig überragt, wirkt die Flüssigkeitsreibung auch noch, wenn die Reibfläche bereits ihre Gegenlamelle berührt. Außerdem wirken die Reibflächen selbst auch als Flüssigkeitsreibungsflächen, solange sie noch nicht an der Gegenlamelle anliegen.

In weiterer Ausgestaltung der Erfindung ist es vorteilhaft, die Reibbeläge in Eindrehungen der Lamelle anzubringen. So können die Reibbeläge in der für deren Festigkeit und Wärmehaushalt optimalen Dicke ausgeführt werden, bei ausreichend geringer Spaltweite für die Drehmomentübertragung durch Flüssigkeitsreibung.

In einer anderen Ausgestaltung der Erfindung erstreckt sich der Reibbelag über einen größeren Teil der wirksamen Lamellenfläche und weist einen kreisförmigen Absatz auf, der die Reibflächen der Reibbeläge begrenzt. Die Lamellen (sie sind dann eigentlich nur mehr Reibbelagträger) können dann wesentlich dünner und ohne Einsenkungen ausgeführt werden und trotzdem läßt sich in der der Flüssigkeitsreibung vorbehaltenen Zone der Reibbeläge eine ausreichend geringe Spaltweite erzielen. Das ist nur bei regelbaren Flüssigkeitsreibungskupplungen ohne "Hump" möglich, da solche mit "Hump" ja Schlitze oder Durchbrechungen aufweisen müssen, um dessen Auftreten sicherzustellen.

In weiterer Ausgestaltung dieser Variante ist es möglich, am inneren Teil des Reibbelages noch eine weitere kreisringförmige Reibfläche auszubilden. Dadurch können auch bei sehr hoch belasteten Kupplungen die Lamellen sehr dünn sein, weil durch die Anlage in der inneren und in der äußeren Zone thermisch und lastbedingte Verformungen verhindert werden.

Als besonders geeignet und mit der viskosen Flüssigkeit verträglich hat sich ein Reibbelag aus einem papierhaltigen Werkstoff herausgestellt. Schließlich können die Reibflächen des Belages auch noch profiliert sein.

Im folgenden wird die Erfindung an Hand der Abbildungen einiger Ausführungsbeispiele beschrieben und erläutert:

Es stellen dar:
- Fig.1:: Die obere Hälfte einer erfindungsgemäßen Flüssigkeitsreibungskupplung im Axialschnitt in einer ersten Ausführungsform,
- Fig.2:: Dasselbe in einer zweiten Ausführungsform,
- Fig.3:: Ein Schaubild der Beziehung zwischen Drehmoment und Schlupf, gültig für Flüssigkeitsreibungskupplungen nach dem Stand der Technik und gemäß der Erfindung,
- Fig.4:: Detail X aus Fig. 1 oder 2, stark vergrößert,
- Fig.5:: Dasselbe in einer anderen Ausführungsform,
- Fig.6:: Dasselbe in einer weiteren Ausführungsform,
- Fig.7:: Ansicht A in Fig. 4.

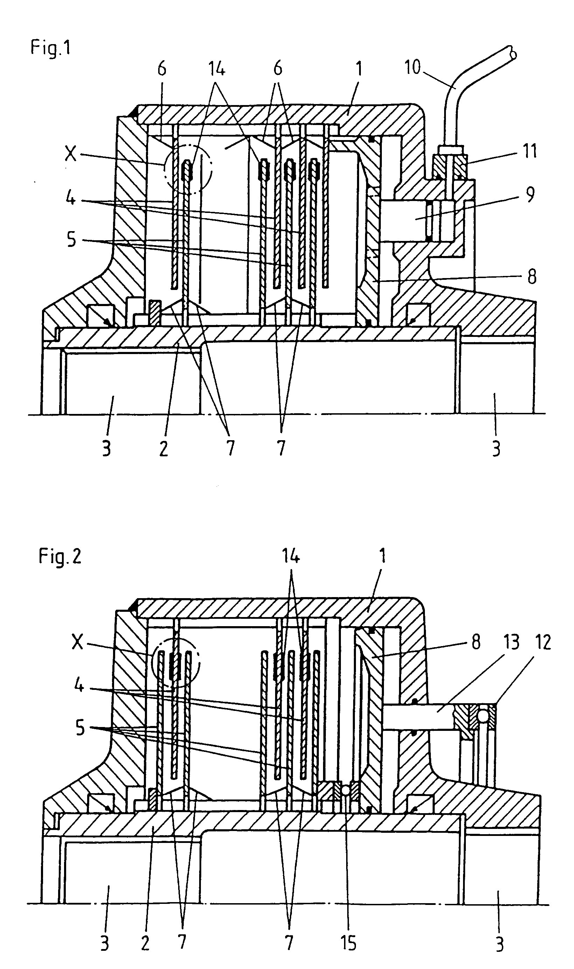

Die in Fig.1 dargestellte Flüssigkeitsreibungskupplung besteht aus einem äußeren, ein flüssigkeitsdichtes Gehäuse bildenden Teil 1 und einem in diesem frei drehbar angeordneten inneren Teil 2, wobei diese beiden Teile 1, 2 Keilwellenverzahnungen 3 od. dgl. zur drehfesten Verbindung mit einer An- bzw. Abtriebswelle aufweisen. Insbesondere kann in dieser Ausführungsform der Gehäuseteil 1 raumfest sein und besipielsweise mit dem Gehäuse eines nicht dargestellten Planetengetriebes verbunden sein. In diesem Fall ist keine Abtriebswelle vorhanden.

Als Kupplungsglieder zwischen dem äußeren Kupplungsteil 1 und dem inneren Kupplungsteil 2 dienen Außenlamellen 4 und Innenlamellen 5, die zwei koaxiale ineinandergreifende Sätze bilden. Die Lamellen 4 sind als Außenlamellen mit dem äußeren Kupplungsteil 1 und die Lamellen 5 als Innenlamellen mit dem inneren Kupplungsteil 2 drehfest, aber axial verschiebbar verbunden. Zwischen den Außenlamellen 4 und den Innenlamellen 5 sind ringförmige Tellerfedern 6,7 eingesetzt, die die Lamellen 4,5 auseinander spreizen und deren Abstände gleich halten. Im äußeren Kupplungsteil 1 ist ein Druckkolben 8 gleitend geführt, der gegen die Außen- und Innenlamellen 4,5 drückt, um den Lamellenabstand gegen die Kraft der Tellerfedern 6,7 zu verändern. Der Kolben 8 wird mittels Stellkolben 9 (in der Regel mehrere, nur einer ist abgebildet) verschoben, der von einer Leitung 10 über einen Gleitring 11, der bei feststehenden Gehäuse wegfallen kann, mit einem hydraulischen Druckmittel beaufschlagbar ist. Die Innenlamellen 5 sind beiderseits mit Reibbelägen 14 versehen, auf die weiter unten näher eingegangen wird.

Eine bevorzugte Ausführungsvariante nach Fig. 2 unterscheidet sich von der nach Fig.1 nur dadurch, daß der Druckkolben 8 über ein Axiallager 15 auf die Innenlamellen 5 wirkt und daß der Kolben 8 nicht hydraulisch verschoben, sondern von außen her über einen Druckring 12, der mit achsparalellen Fingern 13 das Gehäuse bzw. den äußeren Kupplungsteil 1 dicht durchsetzt und auf den Druckkolben 8 einwirkt und dadurch, daß hier die Außenlamellen 4 mit Reibbelägen 14 versehen sind.

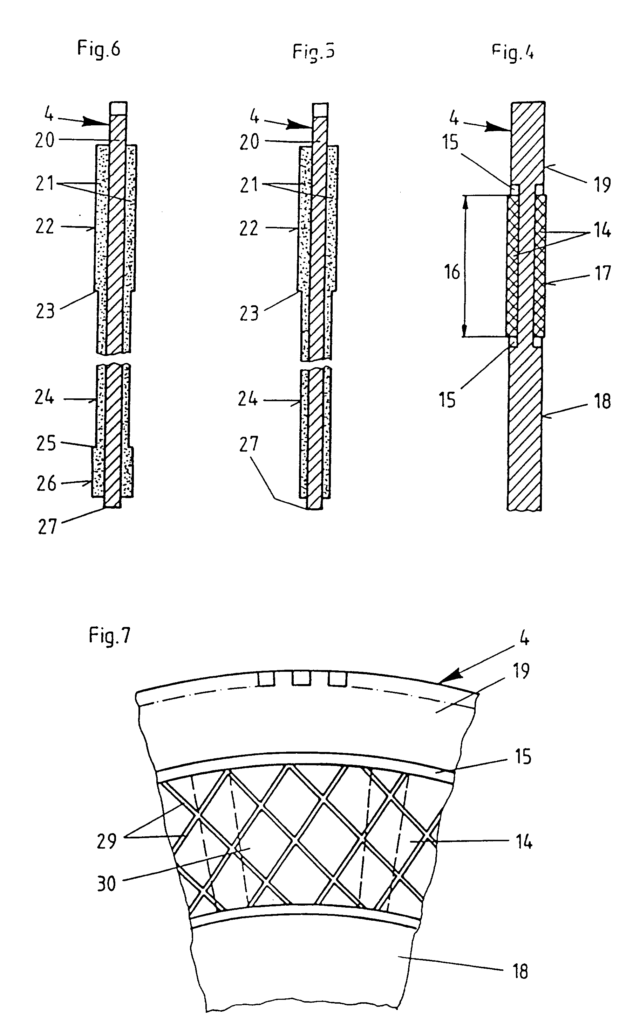

Fig. 4 zeigt eine erste Ausführungsform der Reibbeläge 14 am Beispiel einer Außenlamelle 4 der Fig.2, wobei die Innenlamellen 5 keine Reibbeläge aufweisen. Die Abmessungen der Reibbeläge und die Verhältnisse sind bei Innenlamellen 5 mit Reibbelag, wie in Fig.1 dargestellt, dieselben, wobei dann die Außenlamellen ohne Reibbelag sind. Jedenfalls sind alle Außenlamellen 4 gleich und ebenso alle Innenlamellen 5 und je nach Erfordernis kann eine beliebige Anzahl von Lamellenpaaren vorgesehen sein. Die Außenlamellen 4 weisen in der Nähe ihres äußeren Umfanges kreisringförmige Einsenkungen 15 auf, in denen die Reibungsbeläge 14, beispielsweise durch Kleben, befestigt sind. Dabei können diese kreisringförmig sein oder aus mehreren Teilen bestehen (siehe Fig.7)

Zu erkennen ist, daß die Reibflächen 17 der Reibungsbeläge 14 nur eine schmale kreisringförmige Zone 16 bilden, deren Fläche etwa ein Fünftel bis ein Drittel der gesamten wirksamen Lamellenfläche beträgt und die Stirnflächen 18,19 der Lamelle 4 in axialer Richtung nur geringfügig (Überstand etwa 0,2 mm) überragen. So können auch bei bereits an den Innenlamellen 5 schleifenden Reibungsbelägen 14 die Stirnflächen 18,19 noch durch Flüssigkeitsreibung ein Drehmoment übertragen. Wenn sich Innenlamellen 5 und Außenlamellen 4 nicht berühren, steht die gesamte Oberfläche, also die Stirnflächen 18,19 und die Oberfläche 17 des Reibbelages 14 für die Drehmomentübertragung durch Flüssigkeitsreibung zur Verfügung. Die radiale Breite 16 der Reibbeläge 14 wird bei der Auslegung der Kupplung optimiert.

Fig.5 zeigt eine weitere Ausführungsform der Reibbeläge am Beispiel einer Außenlamelle 4. Diese besteht hier nur aus einer dünnen Platte 20. An dieser sind wieder beiderseits Reibbeläge 21 befestigt, beispielsweise angeklebt. Diese weisen eine erste Zone auf, die die Reibfläche 22 bildet und, durch einen Absatz 23 getrennt, eine zurückgesetzte Zone 24, die bis zum inneren Rand 27 der Außenlamelle 4 reichen kann. Dadurch wird das Einfräsen oder Eindrehen der Einsenkung in der Ausführungsform der Fig.4 eingespart. Die geringere Dicke der die Lamelle 4 bildenden Platte 20 ist dadurch möglich, daß sie durch den Reibungsbelag 21 vor Verschleiß geschützt ist, weiters weil die Lamelle bei einer Flüssigkeitsreibungskupplung ohne "Hump" keine Schlitze oder Durchbrechungen aufweist und schließlich, weil die thermische Belastung wegen der Möglichkeit, die Kupplung durchzuschalten wesentlich geringer ist.

In der Ausführungsform der Fig.6 weist der zurückgesetzte Teil 24 des Reibungsbelages 21 eine weitere durch einen Absatz 25 begrenzte vorspringende Reibfläche 26 auf, die bei durchgeschalteter Kupplung wieder an der Innenlamelle anliegt, was zusätzlich zur höheren Belastbarkeit der Lamellen die Eintragung eines höheren Anpreßdruckes über den Kolben 8 gestattet. Der Reibflächenanteil kann aber auch auf der gesamten Scherfläche (18,19 in Fig.4) ganz beliebig verteilt sein.

Fig.7 zeigt eine Ansicht einer Außenlamelle 4, gesehen in axialer Richtung, wobei in Weiterbildung der Erfindung der Reibbelag 14 einander schneidende Riefen 29 aufweist. Strichliert ist eine weitere Variante eingezeichnet, bei der der Reibungsbelag durch einzelne Reibflächen 30 gebildet ist.

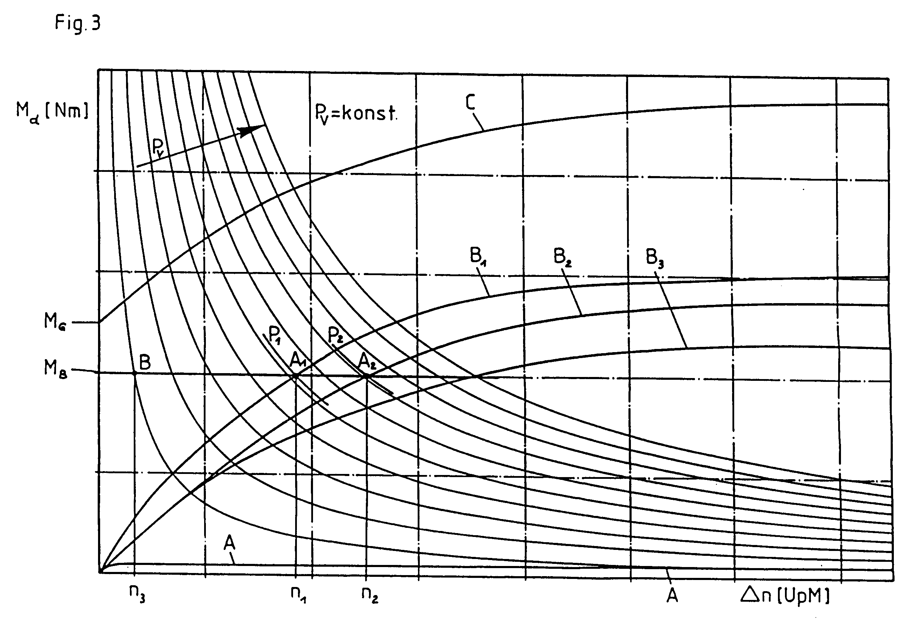

Im folgenden wird die Wirlungsweise der erfindungsgemäßen Flüssigkeitsreibungskupplung anhand des Diagrammes der Fig.3 mit der einer Flüssigkeitsreibungskupplung nach dem Stand der Technik verglichen.

Fig.3 zeigt ein Schaubild, in dem auf der Abszisse der Schlupf (Drehzahldifferenz zwischen innerem Teil 2 und Gehäuse 1 der Kupplung) und auf der Ordinate das übertragende Drehmoment Md dargestellt sind. Darin entspricht die Kurve A der Wirkung als reine Flüssigkeitsreibungskupplung bei maximaler Spaltweite und die Kurven B1, B2 bei minimaler Spaltweite (B1 bei niedrigerer Temperatur und B2 bei höherer Temperatur). Die Kurve C entspricht minimaler Spaltweite mit zusätzlich der vollen Wirkung der Reibbeläge. Das Feld zwischen den Kurven A und C stellt somit den gesamten Regelbereich einer erfindungsgemäßen regelbaren Flüssigkeitsreibungskupplung mit Reibbelägen dar, wobei oberhalb der Kurve B3 die Reibbeläge wirken. Die Kurve B3 liegt wegen des verringerten Flüssigkeitsreibungsanteiles unter der Kurve B1. Das Feld zwischen den Kurven A und B1 stellt hingegen den Betriebsbereich einer regelbaren Flüssigkeitsreibungskupplung nach dem Stand der Technik dar. Weiters ist eine Schar der Kurven konstanter Verlustleistung (P.v = konstant) eingetragen.

Bei einem bestimmten Momentenbedarf (z.B. M_{B}), kann das Regelprogramm verschiedene Verlustleistungspunkte einstellen. Punkt A1 stellt den minimalen Verlustleistungspunkt einer geregelten Flüssigkeitsreibungskupplung ohne Reibbeläge nach dem Stand der Tachnik dar. Dauert dieser Lastzustand länger an, so steigt die Silikonöltemperatur von t₁ auf t₂, wodurch ein Abfall der harten Kennlinie von B1 auf B2 erfolgt und sich M_{B}, beim weiterhin benötigten Moment ein Betriebspunkt A₂ einstellt, bei gleichzeitiger Erhöhung der Differenzdrehzahl von n₁ auf n₂ und der Verlustleistung von P₁ auf P₂. Dadurch würde die Temperatur bis zur Zerstörung der Kupplung weiter ansteigen.

Mit den erfindungsgemäßen Lamellen mit Reibbelag kann die Regelung so erfolgen, daß das benötigte Moment bei der fahrdynamisch niedrigstmöglichen Differenzdrehzahl geliefert wird (Punkt B bei n₃). Es können aber auch die Punkte minimaler Verlustleitung eingeregelt werden, diese sind die Grenzkurve des Kennfeldes. So kann die Kupplung auch auf Verlustleistung Null eingeregelt werden, das bedeutet starren Durchtrieb. Übersteigt dabei das Moment den Grenzwert M_{G}, ist kein starrer Durchtrieb mehr möglich, dieser Moment ist aber sehr hoch. In der Praxis bedeutet das, daß die erfindungsgemäße Kupplung direkt durchgeschaltet werden kann, wenn für volle Beschleunigung des Fahrzeuges maximale Traktion aller vier Räder benötigt wird.

Somit ist die Flüssigkeitsreibungskupplung nach der Erfindung einer solchen nach dem Stand der Technik in allen Fahrzuständen (abgesehen von Bremsungen, für die jedenfalls besondere Maßnahmen erforderlich sind) überlegen, bei geringerem Verschleiß, geringerem Leistungsverlust und höherer Betriebssicherheit.

## Patentansprüche

1. Flüssigkeitsreibungskupplung für die Steuerung der Drehmomentverteilung in einem allradgetriebenen Kraftfahrzeug, die aus einem eine viskose Flüssigkeit enthaltenden flüssigkeitsdichten Gehäuse (1), einer in dieses hineinragenden Welle (2), mit dem Gehäuse (1) drehfest verbundenen Außenlamellen (4), dazwischengreifenden mit der Welle (2) drehfest verbundenen Innenlamellen (5) und einem axial bewegbaren Druckkolben (8) zur Änderung der Spaltweite besteht, bei der es in keinem Betriebszustand zu einem ungeregelten Drehmomentanstieg durch Anstieg des Innendruckes kommt, bei der die gesteuert zur Anlage bringbaren Innen- oder Außenlamellen (4 oder 5) mit einem Reibbelag (14,21,30) versehen sind und bei der die Reibflächen (17,22,26) des Reibbelages (14,21) schmale kreisringförmige Zonen bilden, deren Fläche nur ein Fünftel bis ein Drittel der wirksamen Lamellenfläche beträgt, wobei die Reibflächen (17,22,26) den Rest der wirksamen Lamellenfläche (18,19,24) in axialer Richtung nur um etwa 0,2 mm überragen.

2. Regelbare Flüssigkeitsreibungskupplung nach Anspruch 1 bei der der Reibbelag (14) in Eindrehungen (15) der Lamellen (4,5) angebracht ist.

3. Regelbare Flüssigkeitsreibungskupplung nach Anspruch 1 bei der sich der Reibbelag (21) über einen größeren Teil der wirksamen Lamellenfläche erstreckt und einen kreisförmigen Absatz (23) aufweist, der die Reibfläche (22) des Reibbelages (21) begrenzt.

4. Regelbare Flüssigkeitsreibungskupplung nach Anspruch 3 bei der am inneren Teil des Reibbelages (21) eine weitere kreisringförmige Reibfläche (26) ausgebildet ist.

5. Regelbare Flüssigkeitsreibungskupplung nach Anspruch 1 bei der der Reibbelag (14,21) aus einem papierhaltigen organischen Werkstoff besteht.

6. Regelbare Flüssigkeitsreibungskupplung nach Anspruch 1 bei der die Reibfläche des Reibbelages (14,16,21) ein Profil (29) aufweist.

## Claims

1. Viscous shear coupling for controlling the distribution of torque in an all-wheel driven vehicle, consisting of a fluid-tight housing (1) containing a viscous fluid, a shaft (2) extending into this housing (1), outer disks (4) that are non-rotatably connected to the housing (1), interleaving inner disks (5) non-rotatably connected to the shaft (2), and of an axially movable pressure piston (8) in order to vary the gap width, in which no unregulated torque increase due to a rise of the internal pressure occurs in any operating state, wherein the controllably applied inner or outer disks (4 or 5) are provided with friction linings (14,21,30) and wherein the friction surfaces (17,22,26) of the friction lining (14,21) form narrow annular zones whose surface only amounts to a fifth to a third of the effective disk surface, the friction surfaces (17,22,26) axially projecting from the remainder of the effective disk surface (18,19,24) by only about 0,2 mm.

2. Adjustable viscous shear coupling according to claim 1, wherein the friction linings (14) are installed in annular depressions (15) of the disks (4,5).

3. Adjustable viscous shear coupling according to claim 1, wherein the friction lining (21) extends over the major portion of the effective disk surface and are provided with a circular shoulder (23) which delimits the friction surface (22) of the friction lining (21).

4. Adjustable viscous shear coupling according to claim 3, wherein an additional friction surface (26) in the form of a ring is provided on the inner portion of the friction linings (21).

5. Adjustable viscous shear coupling as in claim 1, wherein the friction lining (14,21) consists of an organic material containing paper.

6. Adjustable viscous shear coupling as in claim 1, wherein the friction surface of the friction lining (14,16,21) is provided with a profile (29).

## Revendications

1. Embrayage à friction hydraulique pour commander la répartition du couple dans un véhicule à quatre roues motrices, comprenant un bâti (1) étanche contenant un fluide visqueux, un arbre (2) faisant saillie dans ledit bâti, des lamelles extérieures (4) solidaire en rotation du bâti (1), des lamelles intérieures (5) solidaires en rotation de l'arbre (2) et s'engrenant dans les espaces intercalaires, et un piston de réglage (8) déplaçable axialement servant à modifier la largeur de fente, dans lequel une montée non réglée du couple due à une augmentation de la pression interne est exclue quel que soit l'état de fonctionnement, dans lequel les lamelles intérieures ou extérieures (4 ou 5), dont la mise en contact est commandée, sont pourvues d'une garniture de friction (14, 21, 30), et dans lequel les surfaces de frottement (17, 22, 26) de la garniture de friction (14, 21) forment des zones étroites en forme d'anneau circulaire dont les surfaces ne représentent qu'un cinquième à un tiers de la surface de lamelle effective, les surfaces de frottement (17, 22, 26) ne dépassant, en direction axiale, de la surface de lamelle effective restante (18, 19, 24) que d'environ 0,2 mm.

2. Embrayage à friction hydraulique réglable selon la revendication 1, dans lequel la garniture de friction (14) est fixée, dans des évidements (15) ménagés dans les lamelles (4, 5).

3. Embrayage à friction hydraulique réglable selon la revendication 1, dans lequel la garniture de friction (21) s'étend sur une majeure partie de la surface de lamelle effective, et présente un épaulement (23) circulaire qui délimite la surface de frottement (22) de la garniture de friction (21).

4. Embrayage à friction hydraulique réglable selon la revendication 3, dans lequel sur la partie intérieure de la garniture de friction (21), est formée autre surface de frottement (26) en forme d'anneau circulaire.

5. Embrayage à friction hydraulique réglable selon la revendication 1, dans lequel la garniture de friction (14, 21) est constituée d'une matière organique contenant du papier.

6. Embrayage à friction hydraulique réglable selon la revendication 1, dans lequel la surface de frottement de la garniture de friction (14, 16, 21) présente un profil (29).
